# EUROPEAN PATENT APPLICATION

(11) **EP 4 451 643 A1**
(43) Date of publication of application: **23.10.2024**
(21) Application number: 22906711.1
(22) Date of filing: 16.12.2022
(51) Int. Cl.: H04L 65/1016

(54) **REQUEST PROCESSING METHOD, NETWORK NODE AND COMPUTER-READABLE STORAGE MEDIUM**

(30) Priority: 16.12.2021 CN 202111538572
(71) Applicant: ZTE Corporation, Shenzhen, Guangdong 518057 (CN)
(72) Inventor: ZHAO, Shirong, Shenzhen, Guangdong 518057 (CN); LING, Wenjie, Shenzhen, Guangdong 518057 (CN); WANG, Chen, Shenzhen, Guangdong 518057 (CN)
(74) Representative: Vossius & Partner Patentanwälte Rechtsanwälte mbB
(86) International application number: PCT/CN2022/139791
(87) International publication number: WO 2023/109967

(57) **Abstract**

Provided are request processing method, network node, and computer-readable storage medium. The method for I-CSCF includes receiving a first registration refresh request transmitted by P-CSCF, the first registration refresh request is generated by P-CSCF based on a second registration refresh request transmitted by UE, and the first registration refresh request includes historical registration information corresponding to UE. The historical registration information carries address information of a registration server that is cached by P-CSCF in the case that a last registration is successful. Transmitting the first registration refresh request to S-CSCF based on the historical registration information in the first registration refresh request. The influence of situations such as signaling surge, congestion, and service interruption, etc., on request processing can be overcome, network robustness can be improved, and network performance can be optimized, thereby ensuring normal network service.

## Description

### CROSS-REFERENCE TO RELATED APPLICATION(S)

This application claims priority to Chinese patent application No. 202111538572.1, filed with the Chinese Patent Office on December 16, 2021, and entitled "Request processing method, network node, and computer-readable storage medium", the disclosure of which is incorporated herein by reference in its entirety.

### FIELD

Embodiments of the present disclosure relate to the field of communication technology, and in particular to a request processing method, a network node, and a computer-readable storage medium.

### BACKGROUND

As an important upgrade of operator messaging services, 5G messaging opens a new chapter of operator messaging services, brings a new human-computer interaction mode, and builds a more concise, efficient, and intelligent service channel for industry customers, which is increasingly favored. With hundreds of millions of users accessing 5G messaging and voice networks based on IP Multimedia Subsystem (IMS) or simplified IMS, the performance requirements for 5G messaging and voice networks are getting higher.

Currently, 5G messaging and voice networks contain many network elements, which need to cooperate with each other in order to process and complete a message, and congestion, network anomaly and so on occurred in any of the network elements may lead to message processing failures. For example, in a 5G messaging and voice network, in cases of links between an Inquire-Call Session Control Function (I-CSCF) node and a Home Subscriber Server (HSS) or between a Service-Call Session Control Function (S-CSCF) and the HSS or the like having an intermittent disconnection or a complete disconnection, overload, congestion, or equipment failure, and so on, it may be easy to cause registration refresh request processing for a large number of User Equipment (UE) being failed, which further leads to the generation and transmission of frequent or even doubled number of related registration information. This may lead to a surge in the number of signaling needed to be processed in the 5G messaging and voice network and may even cause situations of network congestion to trigger signaling storms and lead to service interruption, which may affect normal use of network services by the users.

### SUMMARY

The following is an overview of the subject matter described in detail herein. This overview is not intended to limit the scope of protection of the claims.

Embodiments of the present disclosure provide a request processing method, a network node, and a computer-readable storage medium that can improve network robustness and ensure normal use of network services by users.

In a first aspect, embodiments of the present disclosure provide a request processing method applied to an inquire-call session control function I-CSCF node, the method including:
receiving a first registration refresh request transmitted by a proxy-call session control function P-CSCF node, the first registration refresh request is generated by the P-CSCF based on a second registration refresh request transmitted by a user equipment UE;
wherein the first registration refresh request includes historical registration information corresponding to the UE, the historical registration information carries address information of a registration server cached by the P-CSCF in the case that a last registration by the UE is successful;
transmitting the first registration refresh request to a service-call session control function S-CSCF node based on the historical registration information in the first registration refresh request.

In a second aspect, embodiments of the present disclosure also provide a request processing method applied to the S-CSCF, the method including:
receiving the first registration refresh request transmitted by the I-CSCF based on historical registration information in the first registration refresh request, the first registration refresh request is generated by the P-CSCF based on a second registration refresh request transmitted by the UE and being transmitted to the I-CSCF;
wherein the historical registration information corresponds to the UE, and the historical registration information carries address information of a registration server cached by the P-CSCF in the case that a last registration by the UE is successful;
processing the first registration refresh request based on the cached subscriber subscription information.

In a third aspect, embodiments of the present disclosure further provide a request processing method applied to a P-CSCF, the method including:
generating a first registration refresh request based on a second registration refresh request transmitted by a UE, wherein the first registration refresh request includes historical registration information corresponding to the UE, the historical registration information carries address information of a registration server cached by the P-CSCF in the case that a last registration by the UE is successful;
transmitting the first registration refresh request to the I-CSCF, such that the I-CSCF transmits the first registration refresh request to the S-CSCF based on the historical registration information in the first registration refresh request.

In a fourth aspect, embodiments of the present disclosure further provide a network node including: a memory, a processor and a computer program stored on the memory and runnable on the processor, the computer program, when executed by the processor, realizing a request processing method as described in the first aspect, the second aspect, and the third aspect above.

In a fifth aspect, embodiments of the present disclosure further provide a computer-readable storage medium storing computer-executable instructions, the computer-executable instructions for executing a request processing method as described in the first aspect, the second aspect, and the third aspect above.

Embodiments of the present disclosure include: a request processing method applied to the I-CSCF, including receiving a first registration refresh request transmitted by the P-CSCF, the first registration refresh request is generated by the P-CSCF based on a second registration refresh request transmitted by the UE; wherein the first registration refresh request includes historical registration information corresponding to the UE, the historical registration information carries address information of the registration server cached by the P-CSCF in the case that a last registration by the UE is successful; and transmitting the first registration refresh request to the S-CSCF based on the historical registration information in the first registration refresh request. Based on a scheme provided in an embodiment of the present disclosure, since the P-CSCF carries the cached address information of the registration server in the second registration refresh request transmitted by the UE, it is able to form a first registration refresh request including historical registration information corresponding to the UE, and when the I-CSCF receives the first registration refresh request, it may transmit the first registration refresh request to the S-CSCF based on the historical registration information in the first registration refresh request, thereby it can overcome the influence of situations such as the network signaling surge, the network congestion, and the network service interruption, etc., which may be caused by a network anomaly on the request processing, improving the network robustness, ensuring that the user can use the network service normally, and enhancing the usage experience; moreover, the I-CSCF can transmit the first registration refresh request to the S-CSCF directly without through a variety of information interactions, which can reduce the number of information interactions between the I-CSCF and various other nodes in the network and optimize network performance.

Other features and advantages of the present disclosure will be set forth in the subsequent specification and, in part, will become apparent from the specification or be understood by implementing the present disclosure. The objects and other advantages of the present disclosure may be realized and obtained by means of a structure particularly indicated in the specification, the claims, and the accompanying drawings.

### BRIEF DESCRIPTION OF THE DRAWINGS

The accompanying drawings are used to provide a further understanding of the technical solutions of the present disclosure, form part of the specification, are used in conjunction with embodiments of the present disclosure to explain the technical solutions of the present disclosure and do not constitute a limitation of the technical solutions of the present disclosure.
FIG. 1 is a schematic diagram of an IMS network architecture for performing a request processing method provided by one embodiment of the present disclosure;
FIG. 2 is a flowchart of a request processing method provided by one embodiment of the present disclosure;
FIG. 3 is a flowchart of transmitting a first registration refresh request to the S-CSCF in a request processing method provided by one embodiment of the present disclosure;
FIG. 4 is a schematic diagram of a flow execution for the request processing method provided by the embodiment shown in FIG. 3;
FIG. 5 is a flowchart of transmitting a first registration refresh request to the S-CSCF in a request processing method provided by another embodiment of the present disclosure;
FIG. 6 is a schematic diagram of a flow execution for the request processing method provided by the embodiment shown in FIG. 5;
FIG. 7 is a flowchart after transmitting a first registration refresh request to the S-CSCF in a request processing method provided by another embodiment of the present disclosure;
FIG. 8 is a flowchart of a request processing method provided by another embodiment of the present disclosure;
FIG. 9 is a flowchart after processing of a first registration refresh request in a request processing method provided by one embodiment of the present disclosure;
FIG. 10 is a flowchart of processing the first registration refresh request in the request processing method provided by one embodiment of the present disclosure;
FIG. 11 is a schematic diagram of a flow execution for the request processing method provided by the embodiment shown in FIG. 10;
FIG. 12 is a flowchart of processing a first registration refresh request in a request processing method provided by another embodiment of the present disclosure;
FIG. 13 is a schematic diagram of a flow execution for the request processing method provided by the embodiment shown in FIG. 12;
FIG. 14 is a flowchart of a request processing method provided by another embodiment of the present disclosure;
FIG. 15 is a flowchart after transmitting a first registration refresh request to the I-CSCF in a request processing method provided by one embodiment of the present disclosure;
FIG. 16 is a schematic diagram of a registration flow for a 5G messaging terminal provided by one embodiment of the present disclosure;
FIG. 17 is a schematic diagram of a network node provided by one embodiment of the present disclosure.

### DETAILED DESCRIPTION OF EMBODIMENTS

In order to make the objects, technical solutions and advantages of the present disclosure clearer and more understandable, the present disclosure is described in further detail hereinafter in conjunction with the accompanying drawings and embodiments. It should be understood that the specific embodiments described herein are only for explaining the present disclosure and are not intended to limit the present disclosure.

It should be noted that although a division of functional modules is made in a schematic diagram of an apparatus and a logical order is shown in a flowchart, in certain cases, the steps shown or described may be performed in a module division different from that in the apparatus, or the order in the flowchart. The terms "first", "second", etc. in the specification and the claims and the above-described accompanying drawings are used to distinguish between similar objects, and need not be used to describe a particular order or sequence.

The present disclosure provides a request processing method, a network node, and a computer-readable storage medium, in which a first registration refresh request including historical registration information corresponding to a UE may be formed because the P-CSCF carries cached address information of a registration server in a second registration refresh request transmitted by the UE, and when the I-CSCF receives the first registration refresh request, it may transmit the first registration refresh request to the S-CSCF based on the historical registration information in the first registration refresh request, thereby it is able to overcome the influence of situations such as the network signaling surge, the network congestion, and the network service interruption, etc., which may be caused by a network anomaly on the request processing, improving network robustness, ensuring that the user may use the network service normally, and enhancing the usage experience; moreover, the I-CSCF may transmit the first registration refresh request to the S-CSCF directly without through a variety of information interactions, which can reduce the number of information interactions between the I-CSCF and various other nodes in the network and optimize network performance.

The embodiments of the present disclosure are further elaborated below in conjunction with the accompanying drawings.

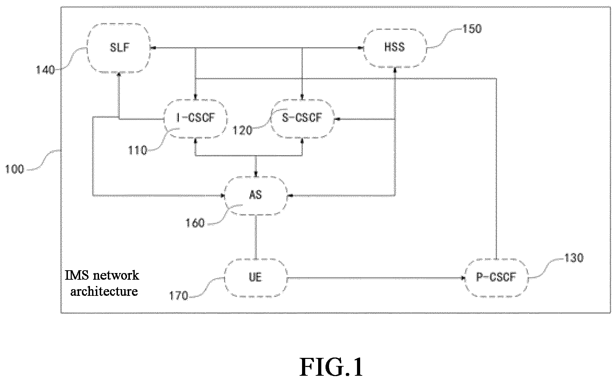

Referring to FIG. 1, FIG. 1 is a schematic diagram of an IMS network architecture 100 for performing a request processing method provided by one embodiment of the present disclosure.

In the example of FIG. 1, the application environment of the IMS network architecture 100 may be, but is not limited to, 5G messaging, 4G/5G voice, and 5G, 6G new calls, etc., and specifically, the IMS network architecture 100 may include, but is not limited to: an I-CSCF 110, an S-CSCF 120, and a Proxy-Call Session Control Function P-CSCF node 130. The I-CSCF 110, the S-CSCF 120, and the P-CSCF 130 are able to cooperate to realize the request processing for user-side devices such as the UE 170 and the message terminal and so on in the IMS network architecture 100, in order to satisfy the network requirements of the user-side devices. Wherein, the I-CSCF 110 may act as a relay node that may perform information interaction with the S-CSCF 120 and the P-CSCF 130 directly; at the same time, the P-CSCF 130 is connected to the UE 170 for receiving a network service request transmitted by the UE 170 and forwarding it to the I-CSCF 110, the network service request including but not limited to various types of registration requests, etc., in particular, which may be set based on application scenarios; S-CSCF 120 acts as a registration server in the IMS network architecture 100 for receiving the network service request transmitted by UE 170 from I-CSCF 110 and processing it. It may be understood that, due to the request processing function possessed by the S-CSCF 120, it is necessary to determine the address information of the S-CSCF 120 in the IMS network architecture 100 in specific application scenarios. Especially for the I-CSCF 110, only after accurately knowing the address information of the S-CSCF 120, it may transmit the corresponding network service request accurately to the corresponding S-CSCF 120, and the embodiments of the present disclosure improve the relevant technology based on this consideration. In another embodiment, as shown in FIG. 1, the IMS network architecture 100 may also include, but is not limited to: a HSS 150 and a Subscriber location Function SLF 140 node, wherein the SLF 140 corresponds to the HSS 150, both of which may be set up as multiple, and the I-CSCF 110 may be used for inquiring the specific HSS 150 through an information interaction with the SLF 140, so as to determine the HSS 150 of different subscription locations; the HSS 150 serves as a storage server, which may be used for storing and providing to the I-CSCF 110, the S-CSCF 120, etc. the address information of the respective S-CSCF 120, the subscriber subscription information corresponding to the respective UE 170, etc., and in a specific application scenario, the SLF 140 and the HSS 150 cooperate with the I-CSCF 110, the S-CSCF 120, and the P-CSCF 130 to realize the request processing in the IMS network architecture 100.

It should be noted that, considering that most of the registration requests initiated by the UE 170 after successful registration are registration refresh requests, and registration refresh failure is more likely to lead to frequent or even double the number of related registration information generation and transmission, resulting in a surge in the number of signaling to be processed in the IMS network architecture 100, and even causing a case of signaling storms triggered by network congestion leading to service interruption, which affects normal use of network services by the users, in order to more clearly clarify the processing flow of the present embodiment for the above situation, but it should not be understood as a limitation of the present disclosure. In the actual application scenarios, those skilled in the art may perform the corresponding processing settings for the specific request transmitted by the UE 170, which is not limited in this embodiment.

In one embodiment, the HSS 150 may be replaced by a Diameter Routing Agent (DRA), both of which may be applied under different network protocols, and the functions of both may be analogous, so that they may be selected based on the needs in specific application scenarios.

In an embodiment, the type of the UE 170 may not be limited, when the application environment of the IMS network architecture 100 may be, but is not limited to, 5G messaging, 4G/5G voice, and 5G, 6G new calls, etc., and under a specific architecture, the UE 170 may be a terminal adapted to a specific architecture, for example, in a 5G messaging network architecture, the UE 170 may be a 5G messaging terminal, and the 5G messaging terminal may be connected to the Application Server (AS 160) through the relevant Session Initialization Protocol (SIP) access module, and then storage of the user information corresponding to the 5G messaging terminal into a pre-set user database may be implemented through registration, in which the AS 160 acts as a role of forwarding in this process. It is understood that even though there may be different ways of registration between different UEs 170, the processing of registration refresh requests for different UEs170 in the present embodiment is applicable, for example, the 5G messaging terminal registers successfully with a message processing function of a 5G messaging center through a SIP access module in the 5G messaging center. The 5G messaging registration flow based on the IMS network architecture 100 is the same as the registration flow of the 4G and 5G users in the IMS network architecture 100 as described above, and is described herein to avoid any misunderstanding.

The I-CSCF 110, the S-CSCF 120, and the P-CSCF 130 in the IMS network architecture 100 may all include a memory and a processor, respectively, wherein the memory and the processor may be connected through a bus or otherwise.

The memory serves as a non-transitory computer-readable storage medium that may be used to store non-transitory software programs as well as non-transitory computer-executable programs. In addition, the memory may include a high-speed random access memory, and may also include a non-transitory memory, such as at least one disk memory device, a flash memory device, or other non-transitory solid state memory device. In some implementations, the memory may optionally include memories remotely located relative to the processor, and these remote memories may be connected to the processor through a network. Examples of the networks described above include, but are not limited to, the Internet, an Enterprise Intranet, a Local Area Network, a mobile communications network, and combinations thereof.

The IMS network architecture 100 and the application scenarios described in the embodiments of the present disclosure are for the purpose of more clearly illustrating the technical solutions of the embodiments of the present disclosure, and do not constitute a limitation on the technical solutions provided by the embodiments of the present disclosure. Those skilled in the art may be aware that, with the evolution of the IMS network architecture 100 and the emergence of new application scenarios, the technical solutions provided by the embodiments of the present disclosure, with respect to similar technical problems, are equally applicable.

It will be appreciated by those skilled in the art that the IMS network architecture 100 shown in FIG. 1 does not constitute a limitation of the embodiments of the present disclosure, and may include more or fewer components than shown, or a combination of certain components, or a different arrangement of components.

In the IMS network architecture 100 shown in FIG. 1, the I-CSCF 110, the S-CSCF 120, and the P-CSCF 130 may each invoke a request processing program stored therein to perform a request processing method.

Based on the above structure of the IMS network architecture 100, various embodiments of the request processing method of the present disclosure are presented.

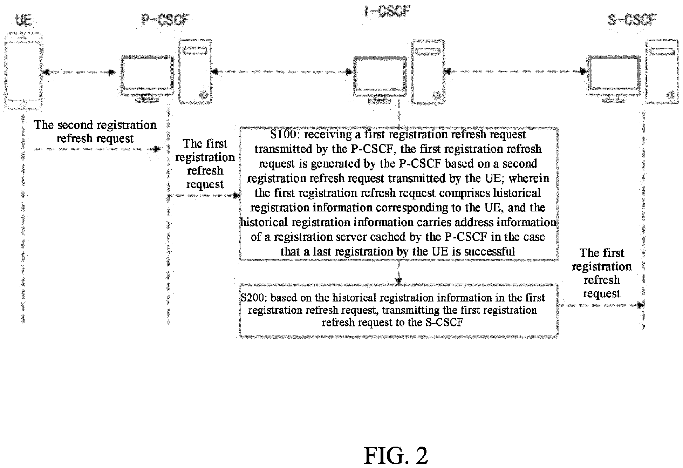

As shown in FIG. 2, FIG. 2 is a flowchart of a request processing method provided in one embodiment of the present disclosure, which may be, but is not limited to, applied to an I-CSCF in an IMS network architecture as shown in the embodiment of FIG. 1, and which includes, but is not limited to, S 100 to S200.

S100: receiving a first registration refresh request transmitted by the P-CSCF, the first registration refresh request is generated by the P-CSCF based on a second registration refresh request transmitted by the UE; wherein the first registration refresh request includes historical registration information corresponding to the UE, and the historical registration information carries address information of a registration server cached by the P-CSCF in the case that a last registration by the UE is successful.

In an embodiment, since the P-CSCF carries the cached address information of the registration server in the second registration refresh request transmitted by the UE, it may form the first registration refresh request including the historical registration information corresponding to the UE. Compared with the second registration refresh request, the first registration refresh request may carry the cached address information of the registration server at the same time, and thus only the first registration refresh request is required to determine the S-CSCF which is the registration server, which can greatly reduce the number of information interactions among the various nodes and optimize the operational performance of the various nodes in the network, as compared with the manner of determining the S-CSCF through information interactions among the various nodes in the existing technology.

In an embodiment, the historical registration information may be the relevant registration information in the Service-Route header field of the last successful registration of the UE. In other words, the P-CSCF is able to cache the address information of the registration server in the Service-Route header field in the case that the last registration by the UE is successful, and thus when verifying the UE, the registration situation of the UE may be verified by determining the address information of the registration server in the Service-Route header field. However, it should be noted that the specific types and composition of the historical registration information and the way in which the P-CSCF caches the address information of the S-CSCF is not limited in this embodiment. For example, those skilled in the art may add relevant control information, alarm information, and so on, into the historical registration information based on specific application scenario, which is not limited in this embodiment.

S200: based on the historical registration information in the first registration refresh request, transmitting the first registration refresh request to the S-CSCF.

In an embodiment, since the P-CSCF carries the cached address information of the registration server in the second registration refresh request transmitted by the UE, it is able to form the first registration refresh request including historical registration information corresponding to the UE, and when the I-CSCF receives the first registration refresh request, it may transmit the first registration refresh request to the S-CSCF based on the historical registration information in the first registration refresh request, thereby it is able to overcome the influence of situations such as the network signaling surge, the network congestion, and the network service interruption, etc., which may be caused by a network anomaly on the request processing, improving the network robustness, ensuring that the user may use the network service normally, and enhancing usage experience. Moreover, the I-CSCF may transmit the first registration refresh request directly to the S-CSCF without through a variety of information interactions, so that the number of information interactions between the I-CSCF and various other nodes in the network may be reduced and network performance may be optimized. Based on the above analysis, it can be seen that the request processing method of the present embodiment has a wide range of application scenarios, has good application performance, and can be applied not only to the processing of the registration refresh request under abnormal network conditions to improve the robustness of the network and ensure that the user can use the network service normally, but also to the forwarding of the registration refresh request under normal conditions of the network to achieve a purpose of optimizing the performance of the network, and thus can satisfy the needs of the user for the use of the network at any given time.

It is to be noted that in certain application scenarios, since the timing of the second registration refresh request transmitted by the UE is usually after the registration is successful, the cached address information of the registration server in the case that a last registration is successful is relatively new and does not change too much in a short period of time, especially in case of there being not a lot of the HSS(s), the S-CSCF(s), and the subscriber subscription information corresponding to the UE, the cached address information of the registration server is more accurate. Accordingly, transmitting the first registration refresh request to the determined S-CSCF of the above embodiment enables the S-CSCF to accurately and efficiently process the first registration refresh request, so as to satisfy the user's network usage experience, but it is understood that the request processing method of the present embodiment is applicable to registration refresh request scenarios in different situations.

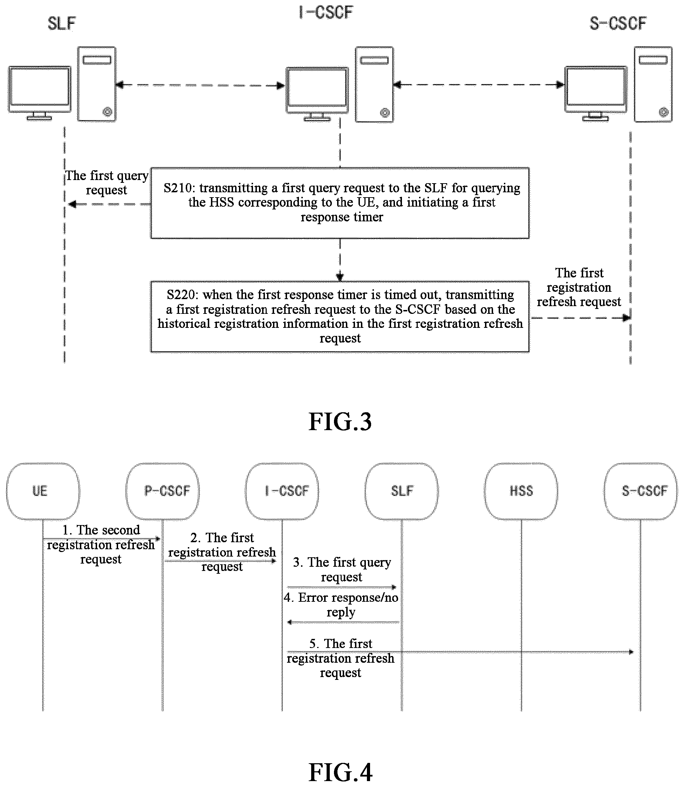

In the example of FIG. 3, S200 includes, but is not limited to, S210 and S220.
S210: transmitting a first query request to the SLF for querying the HSS corresponding to the UE, and initiating a first response timer;
S220: when the first response timer is timed out, transmitting the first registration refresh request to the S-CSCF based on the historical registration information in the first registration refresh request.

In an embodiment, since the HSS stores relevant registration information such as address information of the registration server and the subscriber subscription information, the I-CSCF transmits the first query request to the SLF, so as to facilitate querying of the HSS corresponding to the UE from the SLF, and the setting of the first response timer may time the response of the SLF to the first query request, and when the first response timer is timed out, it means that a link between the I-CSCF and the SLF may have an intermittent disconnection, a complete disconnection, SLF overload, congestion, or equipment failure, etc. In order to avoid the impact caused by the above situations, based on the historical registration information in the first registration refresh request, it is able to directly transmit the first registration refresh request to the determined S-CSCF without waiting for a response from the SLF, which not only can overcome the effect of link failure between the I-CSCF and the SLF, but also can substantially improve the efficiency of information interaction between various nodes.

It is to be noted that the present embodiment does not limit the setting of the response time of the first response timer, and those skilled in the art may set the specific value thereof on their own based on the actual application scenarios. Furthermore, a way of employing a timer response to determine whether the link between the I-CSCF and the SLF is in failure is not the only way, and may be selected specifically based on the application scenarios, which is not limited in the present embodiment. For example, it is considered that the I-CSCF may receive a response from the SLF, but in a specific application scenario, it is not possible to query the HSS corresponding to the UE based on the response, it means that this response is an error response, which corroborates that the link between the I-CSCF and the SLF may be in failure, and in such a case, it is also necessary to directly transmit the first registration refresh request to the determined S-CSCF based on the historical registration information in the first registration refresh request.

One specific example is given below to illustrate the working principle and process of the above embodiment.

### EXAMPLE 1:

As shown in FIG. 4, FIG. 4 is a flow execution schematic diagram of the request processing method provided by the embodiment shown in FIG. 3.

In the example of FIG. 4, a fault-tolerant processing flow for correctly forwarding the first registration refresh request to the S-CSCF is depicted to be realized by interworking between the P-CSCF and the I-CSCF in case of there being an intermittent disconnection, a complete disconnection, SLF overloading, congestion, or device failure on the link between the I-CSCF and the SLF:
Operation 1, the UE transmits the second registration refresh request to the P-CSCF;
Operation 2, the P-CSCF determines whether the received registration request is a registration refresh request, and if so, carries the address information of the registration server in the Service-Route header field of the last successful registration of the UE in the second registration refresh request, thereby forming the first registration refresh request and transmitting it to the I-CSCF;
Operation 3, when the I-CSCF receives the first registration refresh request, it further determines whether the SLF is online, i.e., it transmits a query request for querying the HSS corresponding to the UE to the SLF and sets a timer for waiting for a response;
Operation 4, the I-CSCF determines that no response is received from the SLF (i.e., the timer is timed out) or an error response is received;
Operation 5, the I-CSCF forwards the first registration refresh request to the S-CSCF corresponding to the address information of the registration server it carries based on a preset forwarding policy.

In an embodiment, the preset forwarding policy may include, but is not limited to, a single-user policy, a user group policy, an office-direction policy, and a whole-device policy, etc., or may be any combination of the above policies, in particular:
a) the single-user policy, which may be, but is not limited to, for querying the SLF only once at a preset configured time, for example, within 48 hours, randomly querying the SLF, or querying the SLF based on a time-configured ratio (for example, configuring 20% of the length of the 48-hour period), and the like;
b) the user group policy and the office-direction policy, which may be, but is not limited to, for querying the SLF a preset configured number of times within the configured time (e.g., 1,000 times within 1 hour), randomly querying the SLF, querying the SLF based on a time-configured proportion (e.g., 20%), etc.;
c) the whole-device policy, which may be, but is not limited to, for querying SLF proportionally when the configured message volume (or configured traffic volume) is exceeded (e.g., if 50,000 messages are received per minute, 80% of them are used for querying SLF; if 100,000 messages are received per minute, 60% of them are used for querying SLF; if 200,000 messages are received per minute, then no SLF is queried, etc.), or, after the configured CPU capacity is exceeded , the SLF is queried proportionally (e.g., if the CPU capacity exceeds 60%, then 80% of it is utilized to query the SLF; if the CPU capacity exceeds 70%, then 60% of it is utilized to query the SLF; if the CPU capacity exceeds 95%, the SLF is not queried, etc.).

It is understood that those skilled in the art may also set the corresponding forwarding policy based on the specific application scenario, which is not limited in the present embodiment; furthermore, the preset forwarding policy mentioned in the following examples may be the same as the preset forwarding policy of the present embodiment, and for the sake of avoiding redundancy, the preset forwarding policy will not be described in detail in the subsequent examples.

For example, it is to be illustrated that Operations 3 and 4 are executed, and when the following two situations are satisfied, it may skip and not execute these two operations and directly proceed to Operation 5, wherein the two situations are:
1) the I-CSCF determines that the SLF is offline;
2) in order to improve network performance and reduce the number of information interactions between various nodes, the I-CSCF chooses not to transmit a query request for querying the HSS corresponding to the UE based on the preset forwarding policy.

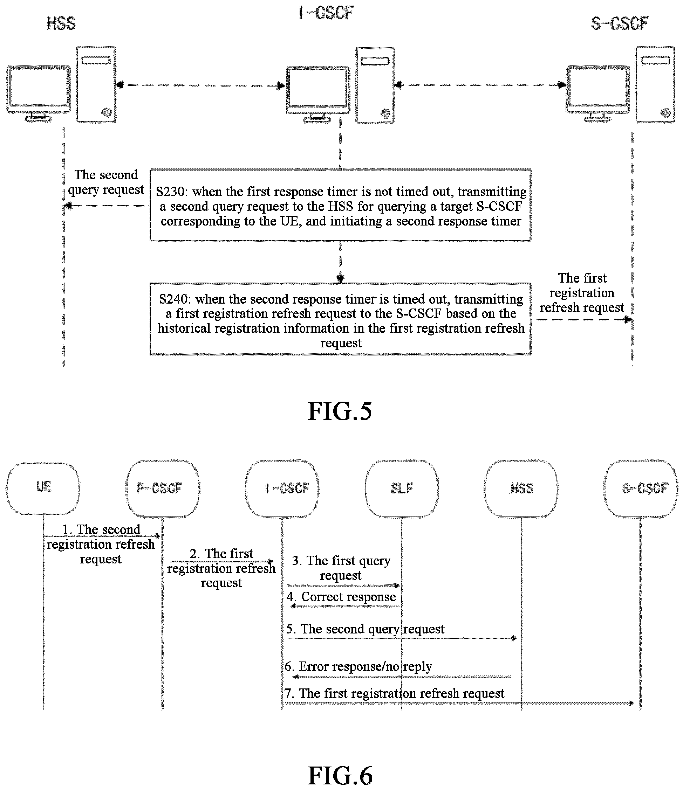

In the example of FIG. 5, S200 further includes, but is not limited to, S230 and S240.
S230: when the first response timer is not timed out, transmitting a second query request for querying a target S-CSCF corresponding to the UE to the HSS, and initiating the second response timer;
S240: when the second response timer is timed out, transmitting the first registration refresh request to the S-CSCF based on the historical registration information in the first registration refresh request.

In an embodiment, when the first response timer is not timed out, it means that the link between the I-CSCF and the SLF is in a normal condition, and the I-CSCF has received a response from the SLF, and thus it is able to transmit a second query request for querying the target S-CSCF corresponding to the UE to the HSS based on the response from the SLF, and initiate the second response timer. Accordingly, if the second response timer is timed out, then the I-CSCF is unable to obtain the target S-CSCF corresponding to the UE through the HSS, which indicates that the link between the I-CSCF and the HSS may be in an intermittent disconnection, a complete disconnection, HSS overloading, congestion, or device failure, etc., and thus it is necessary to transmit the first registration refresh request to the determined S-CSCF directly based on the historical registration information in the first registration refresh request, without waiting for a response from the HSS or querying the target S-CSCF corresponding to the UE, which is not only able to overcome the impact of the link failure between the I-CSCF and the HSS, but also substantially improve the efficiency of the information interaction between the various nodes.

It is to be illustrated that the present embodiment does not limit the setting of the response times of the first response timer and the second response timer, and those skilled in the art may set the specific values thereof on his or her own based on actual application scenarios; furthermore, a way of employing a timer response in order to determine whether a link between the I-CSCF and the HSS is in failure is not the only way, but may also be selected specifically based on the application scenarios, which is not limited in the present embodiment. For example, considering that the I-CSCF may receive a response from the HSS, but in a specific application scenario, it does not query the target S-CSCF corresponding to the UE based on the response, which indicates that this response is an error response, corroborating that the link between the I-CSCF and the HSS may be in failure, and in such a case, it is also necessary to transmit the first registration refresh request directly to the determined S-CSCF based on historical registration information in the first registration refreshment request.

One specific example is given below to illustrate the working principle and process of the above embodiment.

### EXAMPLE 2:

As shown in FIG. 6, FIG. 6 is a flow execution schematic diagram of the request processing method provided by the embodiment shown in FIG. 5.

In the example of FIG. 6, a fault-tolerant processing flow for correctly forwarding the first registration refresh request to the S-CSCF is described to be realized through interworking between the P-CSCF and the I-CSCF in case of there being situations of an intermittent disconnection, a complete disconnection, HSS overloading, congestion, or device failure on the link between the I-CSCF and the HSS:
Operation 1, the UE transmits the second registration refresh request to the P-CSCF;
Operation 2, the P-CSCF determines whether the received registration request is a registration refresh request, and if so, it may carry the address information of the registration server in the Service-Route header field of the last successful registration of the UE in the second registration refresh request, thereby forming the first registration refresh request and transmitting it to the I-CSCF;
Operation 3, when the I-CSCF receives the first registration refresh request, it further determines whether the SLF is online or not, i.e., transmitting a query request for querying the HSS corresponding to the UE to the SLF and sets a timer for waiting for a response;
Operation 4, when the I-CSCF receives a correct response from the SLF, it may do away with the timer in Operation 3 and obtain the address information of the HSS corresponding to the UE;
Operation 5, the I-CSCF further determines whether the HSS is online or not, i.e., transmitting a query request to the HSS for querying the target S-CSCF corresponding to the UE, and sets a timer for waiting for the response;
Operation 6, the I-CSCF determines that no response is received from the HSS (i.e., the timer is timed out) or an error response is received;
Operation 7, the I-CSCF forwards the first registration refresh request to the S-CSCF corresponding to the address information of the registration server it carries based on the preset forwarding policy.

For example, it is to be illustrated that Operations 5 and 6 are executed, and when the following two situations are satisfied, it may skip and not execute these two operations and directly proceed to Operation 7, wherein the two situations are respectively as:
1) the I-CSCF determines that the HSS is offline;
2) in order to improve the network performance and reduce the number of information interactions between various nodes, the I-CSCF chooses not to transmit a query request for querying the address information of the S-CSCF corresponding to the UE based on the preset forwarding policy.

Furthermore, if there is only one HSS in the network, Operations 3 and 4 have no practical significance and may be omitted and Operation 5 may be directly executed.

It is to be understood that, in another application scenario, the HSS in the above embodiment may be completely replaced with a DRA, or, adaptively replaced with a combination node of the HSS and the DRA, e.g., the cooperation of the HSS and the DRA may be realized based on a preset combination way, etc., and the rest of the operations and the process will not change, and for the sake of avoiding redundancy, it will not be repeated herein.

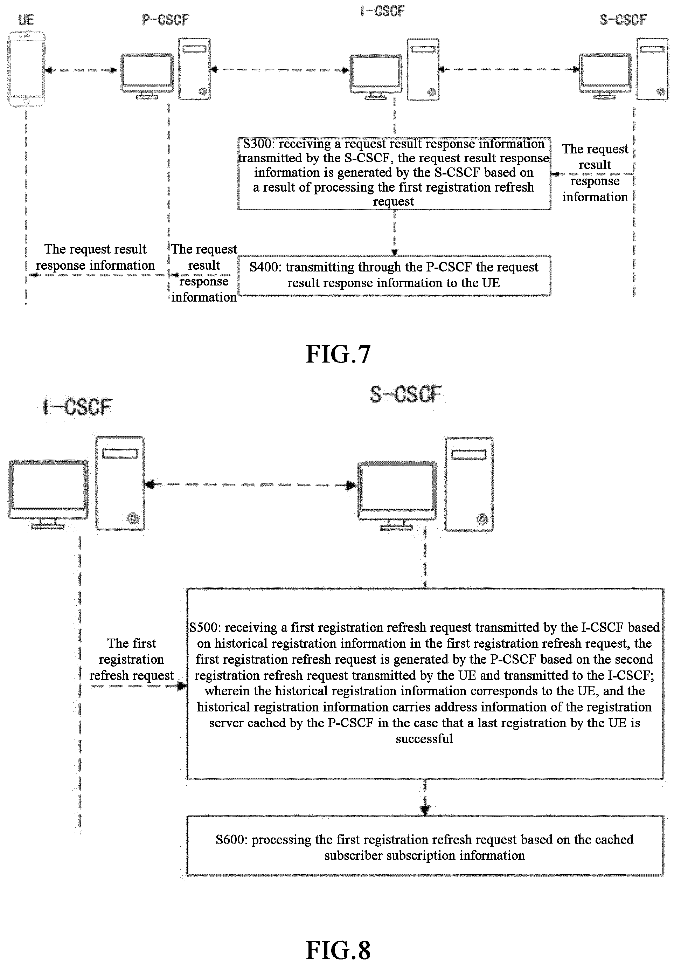

In the example of FIG. 7, S200 is followed by, but not limited to, S300 and S400.
S300: receiving a request result response information transmitted by the S-CSCF, the request result response information is generated by the S-CSCF based on a result of processing the first registration refresh request;
S400: transmitting through the P-CSCF the request result response information to the UE.

In an embodiment, when the S-CSCF receives the first registration refresh request transmitted by the I-CSCF, which in turn is able to process the first registration refresh request, and transmits the request result response information for the processing of the first registration refresh request to the I-CSCF, which in turn finally transmits the request result response information to the UE through the P-CSCF, it is able to inform the UE of the relevant real-time processing situation of the registration refresh request, which facilitates adjustment and control by the user. It is to be understood that since the efficiency and accuracy of transmitting the first registration refresh request to the S-CSCF are greatly improved, a time delay of receiving the request result response information by the UE under the same conditions is advanced as compared with the related technology, which is able to improve the network use experience of the user.

As shown in FIG. 8, FIG. 8 is a flowchart of a request processing method provided by another embodiment of the present disclosure, which may be, but is not limited to, applied to a S-CSCF in an IMS network architecture as shown in the embodiment of FIG. 1, and the request processing method may include, but is not limited to, S500 to S600.
S500: receiving a first registration refresh request transmitted by the I-CSCF based on historical registration information in the first registration refresh request, the first registration refresh request is generated by the P-CSCF based on the second registration refresh request transmitted by the UE and transmitted to the I-CSCF; wherein the historical registration information corresponds to the UE, and the historical registration information carries address information of the S-CSCF cached by the P-CSCF in the case that a last registration by the UE is successful;
S600: processing the first registration refresh request based on the cached subscriber subscription information.

In an embodiment, since the P-CSCF carries the cached address information of the registration server in the second registration refresh request transmitted by the UE, it is able to form the first registration refresh request including historical registration information corresponding to the UE, and when the I-CSCF receives the first registration refresh request, it may transmit the first registration refresh request to the S-CSCF based on the historical registration information in the first registration refresh request, thereby it is able to overcome the influence of situations such as the network signaling surge, the network congestion, and the network service interruption, which may be caused by a network anomaly on the request processing, to improve the network robustness, to ensure that the user can use the network service normally, and to enhance the usage experience. The I-CSCF may transmit the first registration refresh request directly to the S-CSCF without through a variety of information interactions, which can reduce the number of information interactions between the I-CSCF and various other nodes in the network and optimize the network performance. Therefore, after receiving the first registration refresh request, the S-CSCF does not need to obtain and query the subscription information of the UE, but processes the first registration refresh request based on the subscriber subscription information it has cached, which can also reduce the number of information interactions between the S-CSCF and various other nodes in the network and optimize network performance. It is anticipated that the request processing method of the present embodiment can be used in a wide range of application scenarios and has good application performance, which may be applied not only to the processing of the registration refresh request under abnormal network conditions to improve the robustness of the network and ensure that the user can use the network service normally, but also to the forwarding and processing of the registration refresh request under normal conditions of the network to achieve the purpose of optimizing the network performance, and thus can satisfy the needs of the user for using the network at any time.

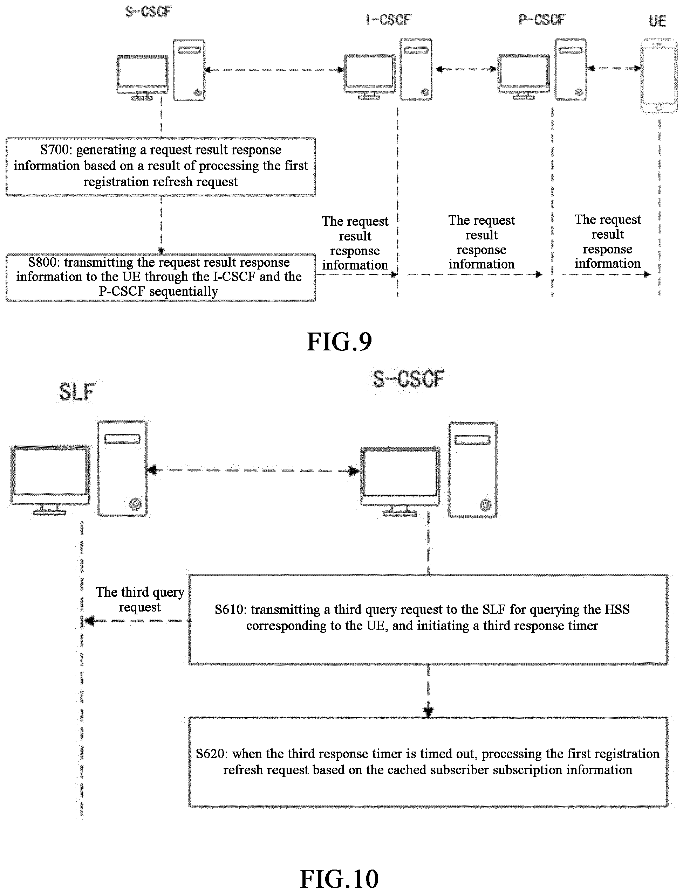

In the example of FIG. 9, S600 is followed by, but not limited to, S700 and S800.
S700: generating a request result response information based on a result of processing the first registration refresh request;
S800: transmitting the request result response information to the UE through the I-CSCF and the P-CSCF sequentially.

In an embodiment, when the S-CSCF receives the first registration refresh request transmitted by the I-CSCF, it is able to process the first registration refresh request based on the cached subscriber subscription information and transmit the request result response information to the UE through the I-CSCF, the P-CSCF sequentially, thereby being able to inform the UE of the real-time processing of the relevant registration refresh request, facilitating the user to make adjustment and control. It is to be understood that since the efficiency and accuracy of receiving the first registration refresh request by the S-CSCF is greatly improved, the time delay of receiving the request result response information by the UE under the same conditions is also advanced as compared with the related technology, thereby being able to improve the network use experience of the user.

In the example of FIG. 10, S600 includes, but is not limited to, S610 and S620.
S610: transmitting a third query request for querying the HSS corresponding to the UE to the SLF, and initiating a third response timer;
S620: when the third response timer is timed out, processing the first registration refresh request based on the cached subscriber subscription information.

In an embodiment, since the HSS stores the subscriber subscription information, the S-CSCF transmits the third query request to the SLF, so as to query the HSS corresponding to the UE from the SLF, and setting the third response timer may time the response of the SLF for the third query request. When the third response timer is timed out, it indicates that there may be an intermittent disconnection, a complete disconnection, SLF overloading, congestion, or device failure, etc., for the link between the S-CSCF and the SLF. In order to avoid the impact caused by the above situations, the first registration refresh request is processed based on the cached subscriber subscription information, without waiting for a response from the SLF, which can not only overcome the impact of the link failure between the S-CSCF and the SLF, but also significantly improve the efficiency of information interaction between the various nodes.

It is to be illustrated that the present embodiment does not limit the setting of the response time of the third response timer, and those skilled in the art may set its specific value by themselves based on the actual application scenario. Furthermore, a way of utilizing the timer response to determine whether or not there is a failure in the link between the S-CSCF and the SLF is not the only way, but it may also be selected specifically based on the application scenario, which is not limited in the present embodiment. For example, if it is considered that the S-CSCF may receive a response from the SLF, but in a specific application scenario, it is not possible to query the HSS corresponding to the UE based on the response, it indicates that this response is an error response, which corroborates that the link between the S-CSCF and the SLF may be in failure, and in this case, it is also necessary to perform processing of the first registration refresh request based on the cached subscriber subscription information.

One specific example is given below to illustrate the working principle and process of the above embodiment.

### Example 3:

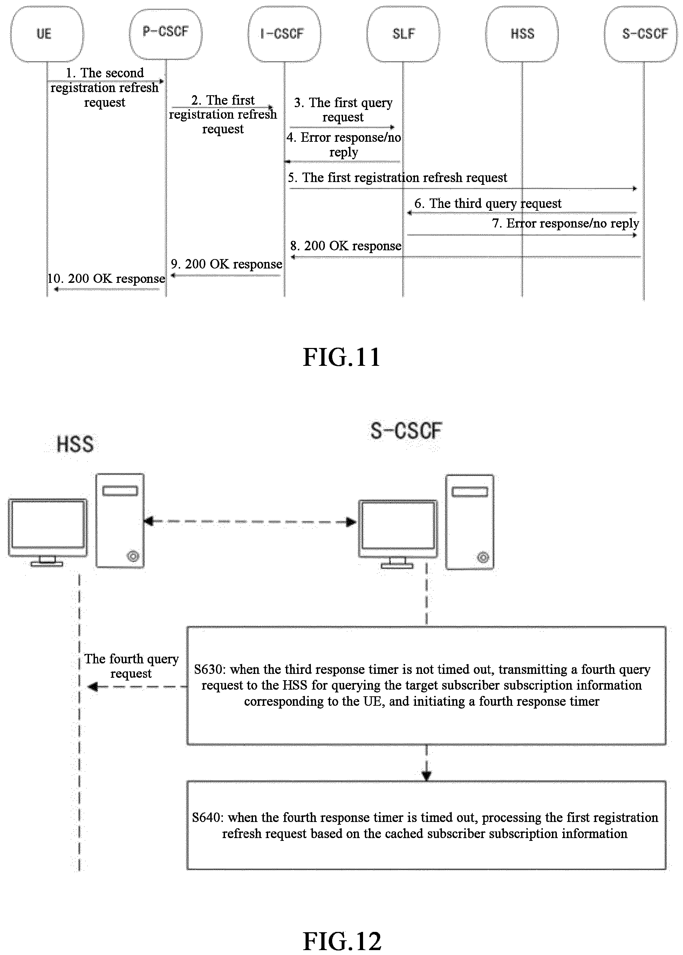

As shown in FIG. 11, FIG. 11 is a flow execution schematic diagram of the request processing method provided by the embodiment shown in FIG. 10.

In the example of FIG. 11, a fault-tolerant processing flow that realizes the successful processing of the first registration refresh request through interworking among P-CSCF, I-CSCF, and S-CSCF is described in case of there being an intermittent disconnection, a complete disconnection, SLF overloading, congestion, or device failure, etc., in the link between the S-CSCF and the SLF, and so on.
Operation 1, the UE transmits the second registration refresh request to the P-CSCF;
Operation 2, the P-CSCF determines whether the received registration request is a registration refresh request, and if so, it may carry the address information of the registration server in the Service-Route header field of the last successful registration of the UE in the second registration refresh request, thereby forming the first registration refresh request and transmitting it to the I-CSCF;
Operation 3, when the I-CSCF receives the first registration refresh request, it further determines whether the SLF is online, i.e., transmitting a query request for querying the HSS corresponding to the UE to the SLF and setting a timer for waiting for a response;
Operation 4, the I-CSCF determines that no response is received from the SLF (i.e., the timer is timed out) or an error response is received;
Operation 5, the I-CSCF forwards the first registration refresh request to the S-CSCF corresponding to the address information of the registration server it carries based on the preset forwarding policy;
Operation 6, when the S-CSCF receives the first registration refresh request, it further determines whether the SLF is online, i.e., transmitting a query request to the SLF for querying the HSS corresponding to the UE, and setting a timer for waiting for the response;
Operation 7, the S-CSCF determines that no response is received from the SLF (i.e., the timer is timed out) or an error response is received;
Operation 8: the S-CSCF completes the registration refresh process using the cached subscriber subscription information based on the preset forwarding policy and transmits a 200 OK response of registration refreshment to the I-CSCF;
Operation 9: the P-CSCF receives the registration refresh 200 OK response transmitted by the I-CSCF and forwards the registration refresh 200 OK response;
Operation 10: the UE receives the registration refresh 200 OK response transmitted by the P-CSCF.

For example, it is to be illustrated that Operations 6 and 7 are executed, and when the following two situations are satisfied, it may skip and not execute these two operations and proceed to Operation 8 directly, wherein the two situations are:
1) the S-CSCF determines that the SLF is offline;
2) in order to improve network performance and reduce the number of information interactions between various nodes, the S-CSCF chooses not to transmit the query request for querying the HSS corresponding to the UE based on the preset forwarding policy.

In addition, if the registration refresh authentication is initiated, but the S-CSCF fails to obtain authentication information from the SLF, HSS, etc. (the specific operations for obtaining the authentication information are similar to Operations 6 and 7 of the present example, and will not be repeated herein), no authentication processing is performed for the current registration refresh process for the UE.

In the example of FIG. 12, S600 further includes, but is not limited to, S630 and S640.
S630: when the third response timer is not timed out, transmitting a fourth query request to the HSS for querying the target subscriber subscription information corresponding to the UE, and initiating a fourth response timer;
S640: when the fourth response timer is timed out, processing the first registration refresh request based on the cached subscriber subscription information.

In an embodiment, when the third response timer is not timed out, it indicates that the link between the S-CSCF and the SLF is in a normal condition, and the S-CSCF has received a response from the SLF, and thus it is able to transmit a fourth query request for querying the target subscriber subscription information corresponding to the UE to the HSS based on the response from the SLF, and to initiate the fourth response timer. Accordingly, if the fourth response timer is timed out, the S-CSCF is unable to obtain the target subscriber subscription information corresponding to the UE through the HSS, which indicates that there may be an intermittent disconnection, a complete disconnection, HSS overloading, congestion, or device failure, etc. for the link between the S-CSCF and the HSS, and thus it is necessary to process the first registration refresh request directly based on the cached subscriber subscription information, without waiting for a response from the HSS and without querying the target subscriber subscription information corresponding to the UE, which can not only overcome the impact of the link failure between the S-CSCF and the HSS, but also significantly improve the efficiency of information interaction among various nodes.

It is to be illustrated that the present embodiment does not limit the setting of the response time of the third response timer and the fourth response timer, and those skilled in the art may set the specific values on their own based on the actual application scenarios. Furthermore, a way of utilizing a timer response to determine whether the link between the S-CSCF and the HSS is in failure or not is not the only way, and it may be selected specifically based on the application scenarios, which is not restricted in the present embodiment. For example, considering that the S-CSCF may receive a response from the HSS, but in a specific application scenario, the target subscriber subscription information corresponding to the UE cannot be queried based on the response, it indicates that this response is an error response, corroborating that the link between the S-CSCF and the HSS may be in failure, and in such a case, it is also necessary to perform processing for the first registration refreshment request based on the cached subscriber subscription information.

It is to be noted that, since the request processing method in the present embodiment belongs to the same inventive concept as the request processing method in the above embodiments, and the difference is only that the execution subject of the request processing method in the present embodiment is the S-CSCF in the IMS network architecture, and the execution subject of the request processing method in the above embodiments is the I-CSCF in the IMS network architecture, the specific implementation of the request processing method in this embodiment may be referred to the specific implementation of the request processing method in the above embodiments, and in order to avoid redundancy, the specific implementation of the request processing method in this embodiment is not repeated herein.

One specific example is given below to illustrate the working principle and process of the above-described embodiment.

### Example 4:

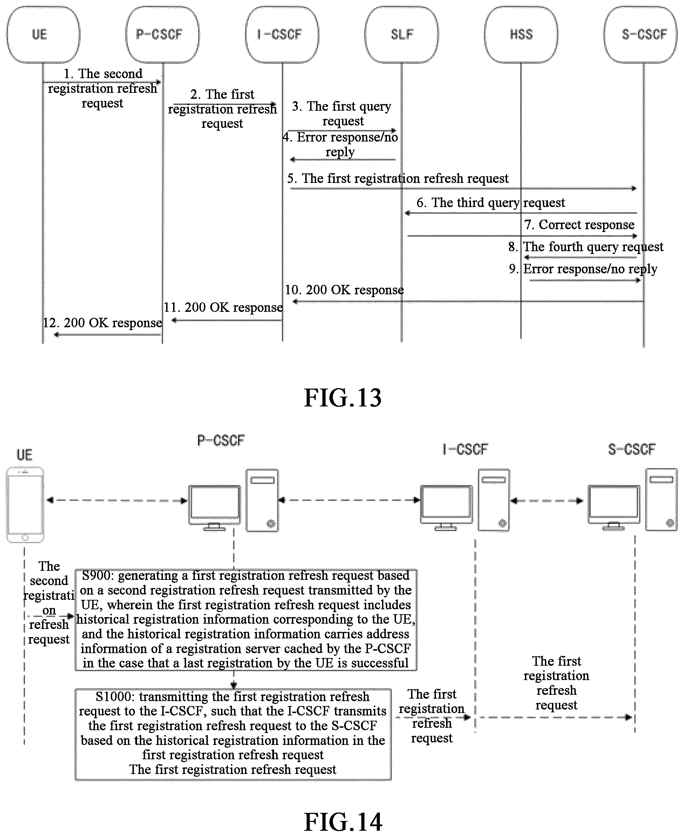

As shown in FIG. 13, FIG. 13 is a flow execution schematic diagram of the request processing method provided by the embodiment shown in FIG. 12.

In the example of FIG. 13, a fault-tolerant processing flow that realizes the successful processing of the first registration refresh request through interworking among the P-CSCF, the I-CSCF, and the S-CSCF is described in case of there being an intermittent disconnection, a complete disconnection, HSS overloading, congestion, or device failure in the link between the S-CSCF and the HSS, and so on.
Operation 1, the UE transmits the second registration refresh request to the P-CSCF;
Operation 2, the P-CSCF determines whether the received registration request is a registration refresh request, and if so, it may carry the address information of the registration server in the Service-Route header field of the last successful registration of the UE in the second registration refresh request, thereby forming the first registration refresh request and transmitting it to the I-CSCF;
Operation 3, when the I-CSCF receives the first registration refresh request, it further determines whether the SLF is online, i.e., transmitting a query request for querying the HSS corresponding to the UE to the SLF and setting a timer for waiting for a response;
Operation 4, the I-CSCF determines that no response is received from the SLF (i.e., the timer is timed out) or an error response is received;
Operation 5, the I-CSCF forwards the first registration refresh request to the S-CSCF corresponding to the address information of the registration server it carries based on the preset forwarding policy;
Operation 6, when the S-CSCF receives the first registration refresh request, it further determines whether the SLF is online or not, i.e., transmitting a query request for querying the HSS corresponding to the UE to the SLF, and setting a timer for waiting for the response;
Operation 7, when the S-CSCF receives a correct response from the SLF, it may do away with the timer in Operation 6 and obtain the address information of the HSS corresponding to the UE;
Operation 8, the S-CSCF further determines whether the HSS is online or not, i.e., transmitting a query request to the HSS for querying the target subscription information corresponding to the UE, and setting a timer for waiting for the response;
Operation 9, the S-CSCF determines that no response is received from the HSS (i.e., the timer is timed out) or an error response is received;
Operation 10: the S-CSCF completes the registration refresh process by utilizing the cached subscriber subscription information based on the preset forwarding policy and transmits a 200 OK response of registration refresh to the I-CSCF;
Operation 11: the P-CSCF receives the registration refresh 200 OK response transmitted by I-CSCF and forwards the registration refresh 200 OK response;
Operation 12: the UE receives the registration refresh 200 OK response transmitted by the P-CSCF.

For example, it is to be illustrated that Operations 8 and 9 are executed, and when the following two situations are satisfied, it may skip and not execute these two operations and proceed to Operation 10 directly, where the two situations are:
1) the S-CSCF determines that the HSS has been offline;
2) in order to improve the network performance and reduce the number of information interactions between various nodes, the S-CSCF chooses not to transmit the query to the target subscription information corresponding to the UE based on the preset forwarding policy.

In addition, if there is only one HSS in the network, Operations 6 and 7 have no practical significance and may be omitted, and Operation 8 is directly executed; if registration refresh authentication is initiated, but the S-CSCF fails to obtain authentication information from the SLF, the HSS, etc. (the specific operations for obtaining the authentication information are similar to Operations 6 to 9 of the present example, and will not be discussed further herein), then the current registration refresh process for the UE does not perform authentication processing.

It is understood that, in another application scenario, the HSS in the above embodiment may be completely replaced with a DRA, or may be adaptively replaced with a combination node of the HSS and the DRA, for example, implementing cooperation of the HSS and the DRA based on a preset combination way, etc., and the rest of the operations and the process will not change, so for the sake of avoiding redundancy, it will not be discussed herein.

As shown in FIG. 14, FIG. 14 is a flowchart of a request processing method provided in another embodiment of the present disclosure, which may be, but is not limited to, applied to a P-CSCF in the IMS network architecture as shown in the embodiment of FIG. 1, and the request processing method includes, but is not limited to, S900 to S1000.
S900: generating a first registration refresh request based on a second registration refresh request transmitted by the UE, wherein the first registration refresh request includes historical registration information corresponding to the UE, and the historical registration information carries address information of a registration server cached by the P-CSCF in the case that a last registration by the UE is successful;
S1000: transmitting the first registration refresh request to the I-CSCF, such that the I-CSCF transmits the first registration refresh request to the S-CSCF based on the historical registration information in the first registration refresh request.

In an embodiment, since the P-CSCF carries the cached address information of the registration server in the second registration refresh request transmitted by the UE, it is able to form the first registration refresh request including the historical registration information corresponding to the UE and transmit the first registration refresh request to the I-CSCF, such that the I-CSCF can transmit the first registration refresh request to the S-CSCF based on the historical registration information in the first registration refresh request, thereby it is able to overcome the influence of situations such as the network signaling surge, the network congestion, and the network service interruption, etc., which may be caused by a network anomaly on the request processing, improve the network robustness, ensure that the user can use the network service normally, and enhance the usage experience; and it may enable the I-CSCF to transmit the first registration refresh request to the S-CSCF directly without through a variety of information interactions by utilizing such a way, which can reduce the number of information interactions between the I-CSCF and various other nodes in the network and optimize the network performance. Therefore, the request processing method of the present embodiment has a wide range of application scenarios and good application performance, which can be applied not only to the processing of registration refresh requests under abnormal network conditions to improve network robustness and ensure that the user can use the network service normally, but also to the forwarding of registration refresh requests under normal network conditions to achieve a purpose of optimizing network performance, and thus it can satisfy network usage requirements of the user at any time.

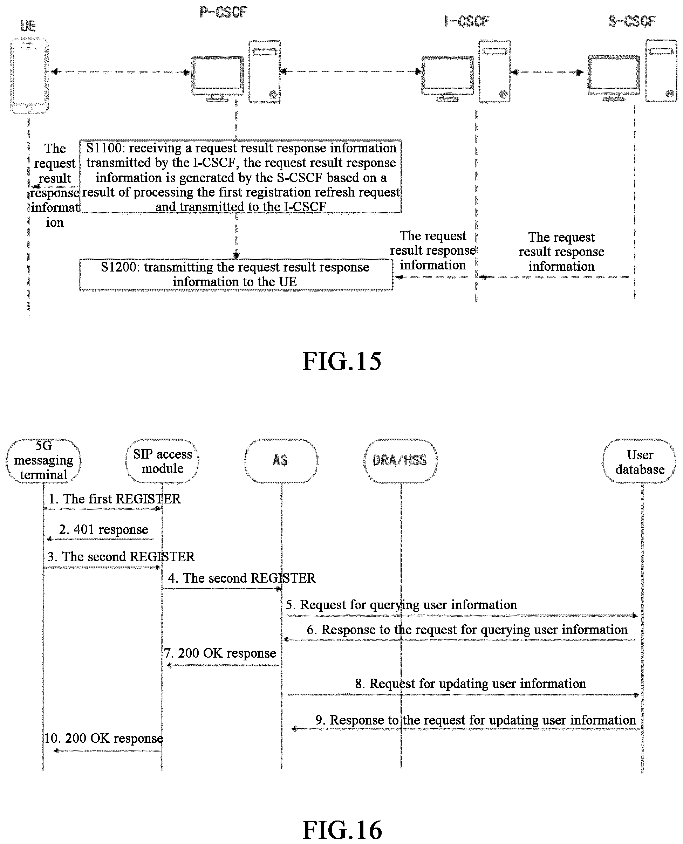

In the example of FIG. 15, S1000 is followed by, but not limited to, S1100 and S 1200.
S1100: receiving a request result response information transmitted by the I-CSCF, the request result response information is generated by the S-CSCF based on a result of processing the first registration refresh request and transmitted to the I-CSCF;
S 1200: transmitting the request result response information to the UE.

In an embodiment, when the S-CSCF receives the first registration refresh request transmitted by the I-CSCF, and thus is able to process the first registration refresh request, and transmits the request result response information for the processing of the first registration refresh request to the I-CSCF, and thus the I-CSCF finally transmits the request result response information to the UE through the P-CSCF, thereby being able to inform the UE of the real-time processing of the relevant registration refresh request, which facilitates adjustment and control by the user; it is to be understood that since the efficiency and accuracy of transmitting the first registration refresh request to the S-CSCF are greatly improved, the time delay of receiving the request result response information by the UE under the same condition is advanced as compared with the related technology, therefore, it is able to enhance the network usage experience of the user.

It is to be noted that, since the request processing method in the present embodiment belongs to the same inventive concept as the request processing method in the above embodiments, and the difference is only that the execution subject of the request processing method in the present embodiment is the P-CSCF in the IMS network architecture, and the execution subject of the request processing method in the above embodiments is the I-CSCF and S-CSCF in the IMS network architecture, the specific implementation of the request processing method in the present embodiment may be referred to the specific embodiment of the request processing method in the above embodiments, and in order to avoid redundancy, the specific implementation of the request processing method in the present embodiment is not repeated herein.

In order to more clearly compare the similarities and differences between the registration process of the 5G messaging terminal and the registration process of the UE in the above embodiments, a specific example is given below for illustration.

### EXAMPLE 5:

As shown in FIG. 16, FIG. 16 is a schematic diagram of a registration process of a 5G messaging terminal provided by one embodiment of the present disclosure.

In the example of FIG. 16, the registration process of the 5G messaging terminal includes the following operations:
Operation 1: the UE transmits a first REGISTER to the SIP access module;
Operation 2: the SIP access module constructs a 401 response to the registration request based on an authentication information and transmits the response to the UE;
Operation 3: the UE transmits a second REGISTER of a challenge response to the SIP access module;
Operation 4: the SIP access module forwards the registration request to the AS after the authentication of the UE has passed;
Operation 5: the AS initiates a request for querying user information to a user database;
Operation 6: the user database replies to the AS with a response to the request for querying the user information;
Operation 7: after passing the authentication, the AS replies to the SIP access module with a 200 OK response to the registration request;
Operation 8: the AS initiates a request for user information update to the user database;
Operation 9: the user database replies with the response to the user information update request;
Operation 10: the SIP access module forwards the registration 200 OK response to the UE.

In addition, the registration refresh process of the 5G messaging terminal is substantially the same as the registration process of the 5G messaging terminal described above, with the following difference(s).

When the SIP access module determines that the received registration request is a registration refresh request, it adds the address of the registration server in the Service-Route header field of the last successful registration of the UE (which is the address of the AS in the 5G messaging) to a registration refresh request message, which is then forwarded to the AS.

The AS performs the registration refresh directly based on the registration server address provided by the SIP access module, thereby reducing the number of information interactions with the user database and being able to improve the application performance of the AS and the user database.

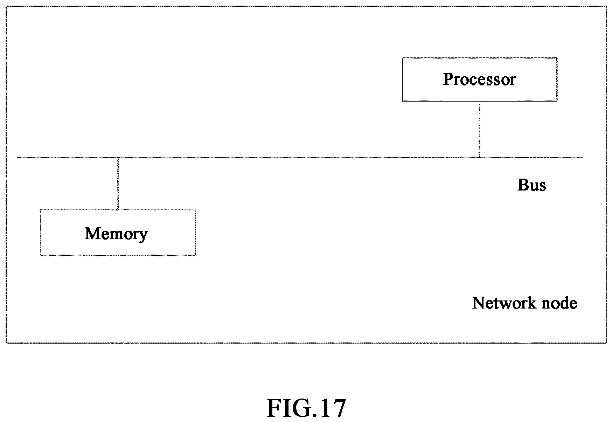

In addition, as shown in FIG. 17, one embodiment of the present disclosure also provides a network node, the network node including: a memory, a processor, and a computer program stored on the memory and runnable on the processor.

The processor and the memory may be connected via a bus or otherwise.

The network node in the present embodiment is capable of forming part of the IMS network architecture, for example, in the embodiment shown in FIG. 1 and these embodiments all belong to the same inventive concept, and therefore these embodiments have the same realization principle as well as technical effect, and will not be described in detail herein.

The non-transitory software program and instructions required to implement the request processing method of the above embodiments are stored in a memory, and when executed by a processor, the request processing method of the above various embodiments is executed, e.g., by executing the above-described S100 to S200 in the method of FIG. 2, the S210 to S220 in the method of FIG. 3, the S230 to S240 in the method of FIG. 5, S300 to S400 in the method of FIG.7, S500 to S600 in the method of FIG. 8, S700 to S800 in the method of FIG. 9, S610 to S620 in the method of FIG. 10, S630 to S640 in the method of FIG. 12, S900 to S 1000 in the method of FIG. 14, or S1100 to S 1200 in the method of FIG. 15.

The above-described embodiments of an apparatus are merely schematic, wherein the units illustrated as separated components may or may not be physically separated, i.e., they may be located at a single place, or they may also be distributed to a plurality of network units. Some or all of these modules may be selected to implement the purpose of the embodiment scheme based on actual requirements.

In addition, one embodiment of the present disclosure further provides a computer-readable storage medium storing computer-executable instructions, in which the computer-executable instructions are executed by a processor or a controller, e.g., by a processor in the above-described device embodiment, may cause the above-described processor to execute a request processing method in the above-described embodiment, e.g., by executing, as depicted above, S100 to S200 in the method of FIG. 2, the S210 to S220 in the method of FIG. 3, S230 to S240 in the method of FIG. 5, S300 to S400 in the method of FIG. 7, S500 to S600 in the method of FIG. 8, S700 to S800 in the method of FIG. 9, S610 to S620 in the method of FIG. 10, S630 to S640 in the method of FIG. 12, S900 to S1000 in the method of FIG. 14, or S 1100 to S1200 in the method of FIG. 15.

It will be understood by those skilled in the art that all or certain steps, systems in the methods disclosed above may be implemented as software, firmware, hardware, and suitable combinations thereof. Certain or all of the physical components may be implemented as software executed by a processor, such as a central processor, a digital signal processor, or a microprocessor, or as hardware, or as an integrated circuit, such as a specialized integrated circuit. Such software may be distributed on a computer-readable medium, which may include a computer storage medium (or non-transitory medium) and a communication medium (or transitory medium). As is well known to those skilled in the art, the term computer storage medium includes volatile and non-volatile, removable and non-removable media implemented in any method or technique for storing information, such as computer-readable instructions, data structures, program modules, or other data. Computer storage media include, but are not limited to, RAM, ROM, EEPROM, flash memory or other memory technology, CD-ROM, Digital Versatile Disk (DVD) or other optical disk storage, magnetic cartridges, magnetic tapes, magnetic disk storage, or other magnetic storage devices, or any other media that can be used to store desired information and that can be accessed by a computer. In addition, it is well known to those skilled in the art that communication media typically include computer-readable instructions, data structures, program modules, or other data in a modulated data signal such as a carrier wave or other transmission mechanism, and may include any information delivery medium.

The above is a specific description of preferred embodiments of the present disclosure, but the present disclosure is not limited to the above embodiments, and a person skilled in the art may make various equivalent deformations or substitutions without violating the spirit of the present disclosure, and these equivalent deformations or substitutions are included in the scope limited by the claims of the present disclosure.

## Claims

1. A request processing method applied to an inquire-call session control function, I-CSCF, node, the method comprises:
receiving a first registration refresh request transmitted by a proxy-call session control function, P-CSCF, node, wherein the first registration refresh request comprises historical registration information corresponding to a UE, the historical registration information carries address information of a registration server cached by the P-CSCF in the case that a last registration by the UE is successful;
determining whether to transmit a first query request to a subscriber location function, SLF, node, wherein the first query request is used for querying a home subscriber server HSS corresponding to the UE;
in response to determining to transmit the first query request, transmitting the first query request to the SLF; and
transmitting the first registration refresh request to a service-call session control function, S-CSCF, node based on the historical registration information in the first registration refresh request, when a first response timer timing for the first query request is timed out or an error response transmitted by the SLF is received.

2. The request processing method of claim 1, wherein the method further comprises:
transmitting a second query request to the HSS for querying a target S-CSCF corresponding to the UE, when the first response timer is not timed out or when a correct response transmitted by the SLF is received; and
transmitting the first registration refresh request to the S-CSCF based on the historical registration information in the first registration refresh request, when a second response timer timing for the second query request is timed out or an error response transmitted by the HSS is received.

3. The request processing method of claim 1 or 2, wherein the method further comprises:
receiving a request result response information transmitted by the S-CSCF, wherein the request result response information is generated by the S-CSCF based on a result of processing the first registration refresh request; and
transmitting the request result response information to the P-CSCF.

4. The request processing method of any one of claims 1 to 3, wherein the transmitting the first registration refresh request to the S-CSCF based on the historical registration information in the first registration refresh request comprises:
obtaining a S-CSCF corresponding to the address information of the registration server based on the address information of the registration server in the historical registration information; and
transmitting the first registration refresh request to the corresponding S-CSCF.

5. The request processing method of claim 1, wherein the determining whether to transmit the first query request to the SLF is based on at least one of the following:
whether the SLF is online; and
a pre-configured forwarding policy.

6. A request processing method applied to a service-call session control function, S-CSCF, node, the method comprises:
receiving a first registration refresh request transmitted by an inquire-call session control function, I-CSCF, node, wherein the first registration refresh request comprises historical registration information corresponding to a UE, the historical registration information carries address information of a registration server cached by a proxy-call session control function, P-CSCF, node in the case that a last registration by the UE is successful;
determining whether to transmit a third query request to a subscriber location function, SLF, node, wherein the third query request is used for querying a HSS corresponding to the UE;
in response to determining to transmit the third query request, transmitting the third query request to the SLF; and
processing the first registration refresh request based on a cached subscriber subscription information, when a third response timer timing for the third query request is timed out or an error response transmitted by the SLF is received.

7. The request processing method of claim 6, wherein the method further comprises:
transmitting a fourth query request to the HSS for querying a target subscriber subscription information corresponding to the UE, when the third response timer is not timed out or a correct response transmitted by the SLF is received;
processing the first registration refresh request based on the cached subscriber subscription information, when a fourth response timer timing for the fourth query request is timed out or an error response transmitted by the HSS is received.

8. The request processing method of claim 6 or 7, wherein after the processing the first registration refresh request based on the cached user subscription information, further comprising:
generating a request result response information based on a result of processing the first registration refresh request; and
transmitting the request result response information to the I-CSCF.

9. The request processing method of claim 6, wherein the determining whether to transmit the third query request to the SLF is based on at least one of the following:
whether the SLF is online; and
a pre-configured forwarding policy.

10. A request processing method applied to a proxy-call session control function, P-CSCF, node, the method comprises:
receiving a registration refresh request transmitted by a UE;
generating a first registration refresh request based on the registration refresh request transmitted by the UE, wherein the first registration refresh request comprises historical registration information corresponding to the UE, the historical registration information carries address information of a registration server cached by the P-CSCF in the case that a last registration by the UE is successful; and
transmitting the first registration refresh request to an inquire-call session control function, I-CSCF, node.

11. The request processing method of claim 10, wherein after the transmitting the first registration refresh request to the I-CSCF, further comprising:
receiving a request result response information corresponding to the first registration refresh request transmitted by the I-CSCF;
transmitting the request result response information to the UE.

12. The request processing method of claim 10 or 11, wherein the historical registration information in the first registration refresh request is used to determine, by the I-CSCF, a S-CSCF corresponding to an address of a registration server carried in the historical registration information.

13. The request processing method of claim 10 or 11, wherein the request result response information is obtained based on a subscriber subscription information cached by a S-CSCF.

14. An inquire-call session control function, I-CSCF, node comprising:
a processor; and
a memory, the memory being coupled to the processor, wherein the processor and the memory are configured to enable the I-CSCF to:
receive a first registration refresh request transmitted by a proxy-call session control function, P-CSCF, node, wherein the first registration refresh request comprises historical registration information corresponding to a UE, the historical registration information carries address information of a registration server cached by the P-CSCF in the case that a last registration by the UE is successful;
determining whether to transmit a first query request to a subscriber location function, SLF, node, wherein the first query request is used for querying a home subscriber server HSS corresponding to the UE;
in response to determining to transmit the first query request, transmitting the first query request to the SLF; and
transmitting the first registration refresh request to a service-call session control function, S-CSCF, node based on the historical registration information in the first registration refresh request, when a first response timer timing for the first query request is timed out or an error response transmitted by the SLF is received.

15. A service-call session control function, S-CSCF, node comprising:
a processor; and
a memory, the memory being coupled to the processor, wherein the processor and the memory are configured to enable the S-CSCF to:
receive a first registration refresh request transmitted by an inquire-call session control function, I-CSCF, node, wherein the first registration refresh request comprises historical registration information corresponding to a UE, the historical registration information carries address information of a registration server cached by a proxy-call session control function, P-CSCF, node in the case that a last registration by the UE is successful;
determining whether to transmit a third query request to a subscriber location function, SLF, node, wherein the third query request is used for querying a HSS corresponding to the UE;
in response to determining to transmit the third query request, transmitting the third query request to the SLF; and
processing the first registration refresh request based on a cached subscriber subscription information, when a third response timer timing for the third query request is timed out or an error response transmitted by the SLF is received.

16. A proxy-call session control function, P-CSCF, node comprising:
a processor; and
a memory, the memory being coupled to the processor, wherein the processor and the memory are configured to enable the P-CSCF to:
receive a registration refresh request transmitted by a UE;
generating a first registration refresh request based on the registration refresh request transmitted by the UE, wherein the first registration refresh request comprises historical registration information corresponding to the UE, the historical registration information carries address information of a registration server cached by the P-CSCF in the case that a last registration by the UE is successful; and
transmitting the first registration refresh request to an inquire-call session control function, I-CSCF, node.

17. A network node comprising: a memory, a processor and a computer program stored on the memory and runnable on the processor, wherein the computer program, when executed by the processor, implements the request processing method of any one of claims 1 to 5.

18. A network node, comprising: a memory, a processor and a computer program stored on the memory and runnable on the processor, wherein the computer program, when executed by the processor, implements the request processing method of any one of claims 6 to 9.

19. A network node, comprising: a memory, a processor and a computer program stored on the memory and runnable on the processor, wherein the computer program, when executed by the processor, implements the request processing method of any one of claims 10 to 13.

20. A computer-readable storage medium storing computer-executable instructions, the computer-executable instructions being used to perform the request processing method of any one of claims 1 to 13.
